# EUROPEAN PATENT SPECIFICATION

(11) **EP 0 643 732 B1**
(45) Date of publication and mention of the grant of the patent: **28.08.1996**
(21) Application number: 93912879.9
(22) Date of filing: 03.06.1993
(51) Int. Cl.: C08F 297/04, C09J 153/02, C09D 153/02, C08G 81/02

(54) **VINYLAROMATIC BLOCK COPOLYMERS BEING HIGHLY SENSITIVE TO RADIATION CURING AND COMPOSITIONS CONTAINING THEM**
VINYLAROMATISCHE BLOCKCOPOLYMERE, DIE BEI STRAHLENVERNETZUNG HOCHEMPFINDLICH SIND UND DIESE ENTHALTENDE ZUSAMMENSETZUNGEN
COPOLYMERES ALTERNES VINYLAROMATIQUES DURCISSANT FACILEMENT PAR EXPOSITION A DES RADIATIONS ET COMPOSITIONS LES CONTENANT

(30) Priority: 04.06.1992 EP 92201623
(43) Date of publication of application: 22.03.1995
(73) Proprietor: SHELL INTERNATIONALE RESEARCH MAATSCHAPPIJ B.V., NL-2596 HR Den Haag (NL)
(72) Inventor: DEBIER, Eric, Rene, Suzanne, B-1348 Ottignies Louvain-La-Neuve (BE); DUPONT, Martine, Jeanne, B-1348 Ottignies Louvain-La-Neuve (BE)
(86) International application number: PCT/EP93/01407
(87) International publication number: WO 93/24547

(56) References cited:
- EP-A- 0 008 146
- EP-A- 0 368 141
- WO-A-88/09800
- US-A- 4 092 375
- US-A- 4 163 764
- US-A- 5 066 728

## Description

The invention relates to block copolymers, containing at least one block predominantly derived from a vinylaromatic monomer and at least one block predominantly derived from a conjugated diene, and more particularly to block copolymers which have shown an attractive sensitivity to radiation curing and to radiation curable sealant, coating and/or adhesive compositions containing said block copolymers.

More in particular the invention is relating to pressure sensitive adhesive compositions containing these block copolymers and providing attractive high temperature resistance even after low radiation dosages, whereas the tack properties remain unchanged.

From the middle seventies several efforts were made to come to block copolymers giving improved properties to adhesive compositions which should be economically processed into their end user form, i.e. giving an optimum balance between processing speed (throughput) and final adhesive properties.

Such efforts can be derived from e.g. U.S. patents Nos. 4,152,231; 4,163,764; 4,391,949 and 4,444,953.

U.S. patent No. 4,152,231 disclosed a cured polymer composition possessing attractive cohesive strength at high temperature, prepared by the radiation curing of a polymer composition in an inert atmosphere, the polymer composition comprising:
(a) 100 parts by weight of a linear or radial conjugated diene polymer selected from the group consisting of homopolymers of C₄-C₁₂ conjugated dienes, and the hydrogenated derivatives thereof;
(b) from 0 to about 250 parts by weight of a tackifying resin; and
(c) from about 1 to about 100 parts by weight of a di- or tetrafunctional acrylate or methacrylate selected from the group consisting of the acrylic and methacrylic acid esters of polyols.

The polymers to be used as component (a) were taught in column 5 to be preferably consisting of a nucleus of a coupling agent or residue and a number of arms of substantially linear unsaturated polymers extending outwardly therefrom, the number of arms varying between 2 and 30 and preferably between from about 7 to about 15.

Star-shaped block copolymers to be applied could be represented by the formulae A-X(A)ₙ and (AB)-X-(B-A)ₙ, wherein n was an integer usually between 2 and 30 and wherein X was a coupling agent nucleus, preferably being a poly(vinylaromatic coupling agent) nucleus and more preferably a poly(divinyl benzene) nucleus.

According to column 6 of said patent (lines 33-38) star polymers to be used should have peak molecular weights between about 25,000 and 1,250,000 and preferably between 100,000 and 500,000, as determined by gel permeation chromatography (GPC) on a polystyrene scale (apparent mol weights).

In column 7, line 55 f.f. the di- to tetrafunctional acrylate or methacrylate coupling agent, which should promote cross-linking of the base polymer during exposure to radiation were clearly regarded as essential component in the adhesive composition, which could be cured by exposure to high energy radiation such as electron beam radiation or ultraviolet radiation.

In column 9, lines 3-11, the amount of required radiation was indicated to be in the range of from 1 to 20 megarads and preferably from about 2 megarad to about 10 megarads for electron beam radiation, whereas for UV radiation as suitable doses are mentioned those received by a 1.5 mil thick adhesive passing under a medium pressure mercury lamp rated at 200 Watts per inch at line speeds of about 10 to about 800 feet per minute and preferably from 25 to 400 feet per minute.

US-A-4,092,375 discloses the preparation of block copolymers by coupling the mixture of polymer blocks A-B-Li and B'-Li in a molar ratio of at least 1:2.5 using an at least trifunctional coupling agent C, the blocks A-B and B' having an LVN between 0.1 and 10 dl/g. It is suggested, that the vinyl content of the diene blocks may be increased by the presence of polar compounds during the polymerization. Block copolymers obtainable by such processes exhibit improved green strength while maintaining satisfactory processability and further properties.

U.S. patent No. 4,163,764 disclosed a process for the preparation of a coupled block copolymer to be used in adhesive compositions, which process comprises the steps of polymerizing a first monomer selected from monovinyl aromatic hydrocarbons under solution polymerization conditions, employing a hydrocarbon diluent, and a first effective increment of a hydrocarbyl monolithium initiator.

Subsequently to the still-living polymerization mixture resulting therefrom at least one second monomer, selected from conjugated dienes together with a second effective increment of a hydrocarbyllithium initiator were added, provided that second initiator increment is greater than said first initiator increment, and the polymerization was continued.

Thereafter, the resulting polymerization admixture was treated with an effective amount of a coupling agent which was at least difunctional, whereby a mixture of coupled block copolymers were produced, which did not contain one predominantly occurring block copolymer, as will be appreciated from column 7, lines 63-68 and column 8, lines 20-65.

It will be appreciated by a person skilled in the art that said U.S. patent did not contain any teaching to radiation curable adhesive compositions and in particular not to any enhancement of the sensitivity of a constituting block copolymer to UV or EB radiation curing.

Moreover, according to the table in the top of columns 7 and 8 the vinyl contents of the polybutadiene blocks in the initially prepared living block copolymers were < 9%, due to the intentional measures specified in column 2, lines 48-63.

From the interrelated U.S. patents Nos. 4,391,949 and 4,444,953 block copolymers and their particular utility in adhesive compositions were known. In particular block copolymers such as KRATON D-1320X are described therein.

The block copolymers showed the structure (A-B 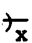 Y(̵C)z, wherein A was a poly(monoalkenyl)aromatic block, B and C were poly(conjugated diene) polymer blocks, Y was the residue of a multifunctional coupling agent and x plus z was greater than 6.

Again no teaching to a person skilled in the art could be found as to radiation curable adhesive compositions and more in particular an enhancement in sensitivity to UV or EB radiation curing of the block copolymer ingredient.

On the other hand there was a general teaching during several years to a person skilled in the art that block copolymers to be used in adhesive compositions, curable by radiation, preferably should contain polyisoprene midblocks, with reference to the difficult control of the processability in hot melt adhesive compositions of poly(butadiene) containing block copolymers.

In connection therewith the up to now only commercially available radiation sensitive styrenic block copolymer had a polyisoprene midblock (KRATON D-1320X).

Hot melt and solvent based adhesive compositions, containing such SIS block copolymers or structurally similar midblock copolymers and being curable by radiation, were disclosed for example in J.R. Erickson, EB Curable Rubber Has More Heat and Solvent Resistance, Adhesive Age, April 1986, p. 22-24; D. de Jager et al., Les Elastomères Thermoplastiques à base de copolymers blocs styréniques et leur utilisation dans les adhésifs thermofusibles, Groupement de Promotion pour la Connaissance des Plastiques, presented November 1989; J.R. Erickson, Experimental Thermoplastic Rubbers for Enhanced Radiation Crosslinking of Hot Melt PSA's, Hot Melt Symposium, May 1985, TAPPI, Technology Park/Atlanta pages 1, 5 and 6; E.E. Ewins and J.R. Erickson, Formulating to Enhance the Radiation Cross-linking of Thermoplastic Rubber for Hot Melt PSA's, June 1987, Hot Melt Symposium TAPPI, Atlanta, p. 35-49; E.E. Ewins and J.R. Erickson, Pressure Sensitive Adhesives, Formulating to Enhance the Radiation Crosslinking of thermoplastic rubber for hot - melt pressure - sensitive adhesives, Tappi Journal, June 1988, p. 155-158 (presented at 1987 Hot Melt Symposium and 1987 Polymers, laminations and Coating Conference); and D. de Jager, Developments in Styrenic block copolymers and systems for Hot Melt Pressure Sensitive Adhesives, 15. Münchner Klebstoff-u Veredlungseminar 1990, p. 96-101 and especially p. 97-99.

As general teaching could be derived by a person skilled in the art from these hereinbefore mentioned publications, that radiation curable adhesive compositions had to contain as main ingredient block copolymers derived from styrene and a branched conjugated diene such as isoprene, that for chemically cross-linking in a desired cross-linking density at economical radiation doses by exposure to either electron beam (EB) radiation or UV radiation, the adhesive formulation had to contain at least one supplemental multifunctional coupling agent such as was known from e.g. Radiation Curing of PSA's based on Thermoplastic Rubbers, D.J. St. Clair, Adhesives Age, March 1990, p. 30-35 and in particular p. 35, and that the selection of tackifying resins was considered to be of prime importance for obtaining the maximum amount of polymer cross-linking with a minimum of EB radiation.

Efforts to meet the major challenge in the design of radiation cross-linkable multiblock copolymers suitable for PSA applications of balancing the cohesive and adhesive strength properties of the PSA after irradiation, in an alternative direction were disclosed in e.g. U.S. patent No. 5,066,728.

In particular said patent disclosed a block copolymer to be used in radiation curable adhesive compositions, having endblocks of phenylbutadiene and an elastomeric midblock of a conjugated diene selected from polyisoprene or polybutadiene, giving rise to cross-link later on by radiation, confined primarily to the endblock domains.

The use of phenylbutadiene as the endblock monomer is alleged to solve a key problem of the prior art, namely preferential cross-linking of the endblocks without substantially cross-linking the elastomeric midblocks. Therefore a person skilled in the art in charge of improving the sensitivity of block copolymers relating to radiation curing in adhesive compositions was only led away from the more conventional block copolymer structures.

It will be appreciated that due to higher environmental and economical requirements to be met by coating, sealant, adhesive compositions, comprising block copolymers of vinylaromatic and conjugated diene, and more particularly those radiation curable coating, sealant, adhesive compositions by minimizing the radiation dosage allowing an increase in line speeds and production rates or using weaker radiation, enhancing safety and decreasing environment charging, there is still an aim at developing improved coating, sealant, adhesive compositions and in particular those comprising block copolymers having a relatively simple structure and therefore relatively low manufacturing costs, and in particular those block copolymers which show an improved sensitiveness for UV or EB radiation when included in coating, sealant, adhesive compositions in combination with an attractive melt viscosity in order to reach the most preferred hot melt compositions.

As a result of extensive research and experimentation there were now surprisingly found novel block copolymers, which appeared to have the above mentioned properties aimed at, when included in radiation curable coating, sealing and adhesive compositions and more in particular a pressure sensitive adhesive composition and more particular a pressure sensitive hot melt adhesive composition.

Accordingly, one aspect of the present invention provides novel block copolymers (AB)ₚ(B)_{q}X wherein A is a poly(vinylaromatic) block and B is a poly(butadiene) block, wherein X is the residue of a polyvalent coupling agent, wherein p has a number average value of at least 1.5 and q has a number average value of 0 or higher, the sum of the p and q values being at least 4, the block copolymer having an average bound vinylaromatic content in the range of from 7 to 35 wt% and preferably in the range of from 10 to 20 wt%, and having a total apparent molecular weight in the range of from 50,000 to 1,500,000 and wherein the vinyl content in the poly(butadiene) blocks is in the range of from 35 to 70% and preferably from 45 to 70%.

It will be appreciated that the specified values of p and q have to be regarded as number average values, due to the occurrence of a mixture of a series of individual molecules as obtained according to the hereinafter specified preparation methods.

For example, in case of a ratio between the initially prepared living polymers AB-Li and B-Li of about 1.0 and a tetravalent coupling agent, the individual molecules in the polymer mixture will be (AB)₄X, (AB)₃BX, (AB)₂(B)₂X, (AB)(B)₃X, (B)₄X while (AB)₂(B)₂X occurs in an amount of 37.5% (6/16).

The poly(monovinylaromatic) blocks may be derived from styrene, alphamethyl styrene, tert.-butyl styrene, 4-propyl styrene, paramethyl styrene and other ringalkylated styrenes, 1-vinylnaphtalene, 2-vinylnaphtalene as well as mixtures thereof, of which styrene is particularly preferred as main component.

The preferred monomer styrene is most preferably used as pure monomer.

A preferred class of block copolymers according to the present invention will contain B blocks, having an apparent molecular weight in the range of from 15,000 to 250,000 and preferably from 25,000 to 80,000, whereas the A blocks have an apparent molecular weight in the range of from 5,000 to 125,000, preferably from 7,000 to 50,000 and most preferably from 9,000 to 12,000.

The most preferred group of block copolymers to be used in hot melt pressure sensitive adhesive, coating or sealant compositions, can be characterized by a structure (AB)ₚ(B)_{q}X, wherein X is the residue of a tetravalent coupling agent, wherein p and q both have a number average value in the range from 2.5 to 1.5 whereas the sum of p and q values being 4, and wherein preferably p and q both have a number average value of from 2.1 to 1.9.

The total apparent molecular weight of these block copolymers is in the range of from 50,000 to 350,000 and preferably in the range of from 200,000 to 300,000 and the vinyl content in the poly(butadiene)blocks is in the range of from 35 to 70% and more preferably from 45 to 70%.

The most preferred group of coupled radial block copolymers can be prepared by a process which comprises:
(a) polymerizing predominantly butadiene in the presence of a living poly(monovinylaromatic) lithium compound A-Li, in which A represents a polymerized monovinyl aromatic block, in the presence of a modifier, so as to form a block copolymer A-B-Li, in which block B substantially comprises 1,2-polymerized butadiene;
(b) polymerizing predominantly butadiene in the presence of an organolithium initiator, RLi, wherein R being an alkyl group and in the presence of a modifier, so as to form a polymer block B-Li, substantially comprising 1,2-polymerized butadiene molecules, and the molar ratio U between the initiator R-Li and the compound A-Li being in the range of from 0.875 to 1.125 and preferably from 0.95 to 1.05, most preferably the ratio aimed at will be as near as possible to 1.0.
(c) coupling the mixture of living polymer blocks A-B-Li and B-Li obtained by the polymerizations mentioned under sub (a) and (b) with a coupling agent X which is tetrafunctional.

It will be appreciated that during the polymerization of predominantly butadiene in both steps (a) and (b), a modifier is present, which causes increased vinyl contents (35-70%). Such vinyl contents in the specified range (35 to 70%) were found to increase the EB and/or the UV radiation sensitivity of the final composition.

Modifiers to be suitably used for this purpose can be selected from the group consisting of ethers, amines and other Lewis bases and more in particular from the group consisting of dialkyl ethers of glycols. Most preferred modifiers are selected from dialkyl ether of ethylene glycol, containing the same of different terminal alkoxy groups and optionally bearing an alkyl substituent on the middle ethylene radical, such as monoglyme, diglyme, diethoxy ethane, 1-ethoxy and 2-tert.-butoxy ethane.

As suitable organilithium initiators can be used one or more compounds selected from the group consisting of ethyllithium, n-propyllithium, isopropyllithium, n-butyllithium, sec-butyllithium, tert.-octyllithium, n-decyllithium, n-eicosyllithium, phenyllithium, 2-naphthyllithium, 4-butylphenyllithium, cyclohexyllithium and 4-cyclopentylbutyllithium, of which sec-butyllithium or tert.-butyllithium are preferred.

With the term "predominantly butadiene" as used throughout the present specification is meant that also butadiene, which contains small amounts of other conjugated dienes or vinylaromatic monomers (< 5 wt%) may be used for the beforedescribed polymerization steps.

An essential feature of the preparation of said most preferred coupled block copolymer is formed by the aim to obtain a reactive molecular structure, which is stable under processing conditions.

In order to obtain an exact as possible ratio 50/50 of polybutadiene and poly(vinylaromatic) - poly(butadiene) arms, care has to be taken that exactly the same amount of the organolithium compound (eg. s-butyllithium) for the initiation of the polymerization of vinylaromatic (styrene) and of butadiene respectively is added in order to reach an almost equal amount of living polymer chains of both types A-B-Li and B-Li.

As coupling agent to form the finally desired star-shaped block copolymer composition, containing (AB)₂B₂X, any compound having four almost equally reactive sites can be used. Preferably SiCl₄, SnCl₄ or DEAP or mixtures thereof can be used.

It will be appreciated that another group of coupled radial block copolymers, showing the improved EB or UV radiation sensitivity according to the invention can be advantageously used in solution pressure sensitive adhesives, coatings and sealings, which can be characterized by a molecular structure (AB)ₚ(B)_{q}X, wherein A and B are as defined hereinbefore, wherein X is the residue of a polyvalent coupling agent, wherein p has a number average value of at least 1.5 and preferably in the range of from 3 to 20 and more preferably in the range from 3 to 10, wherein q has a number average value of 0 or higher and preferably in the range from 0 to 10, wherein the sum of p and q values being at least 4 and preferably more than 6 and more preferably in the range from 6 to 20, and wherein the ratio p/(p+q) is 0.375 or more.

Said group of coupled, radial block copolymers can be prepared by a process which comprises:
(a) polymerizing predominantly butadiene in the presence of a living poly(monovinyl aromatic) lithium compound A-Li, in which A represents a polymerized monovinyl arene block, in the presence of a modifier, so as to form a block copolymer A-B-Li, in which block B substantially comprises 1,2-polymerized butadiene;
(b) optionally polymerizing predominantly butadiene in the presence of an organolithium initiator RLi, wherein R being an alkyl group and in the presence of a modifier, so as to form a polymer block B-Li, substantially comprising 1,2-polymerized butadiene molecules, and wherein the molar ratio U between the initiator R-Li and the compound A-Li is rather irrelevant;
(c) coupling the living polymers AB-Li, optionally mixed with living polymers B-Li with a polyfunctional coupling agent X, whereof the functionality is at least 4 and preferably in the range of from 4 to 20 and more preferably from 6 to 20.

A more preferred subgroup of such coupled radial block copolymers is formed by a process which comprises both steps (a) and (b) as hereinbefore defined.

The advantages obtained by application of the hereinbefore specified groups of block copolymers according to the present invention are:
(a) improved EB or UV radiation sensitivity as compared to the conventional, generally applied prior art block copolymers, like KRATON D-1320X, which means that less radiation energy per surface units is needed or higher processing speed and larger production volumes may be possible;
(b) improved high temperature resistance is obtained after curing of the adhesive composition, comprising the block copolymer;
(c) no additional separate cross-linking agents like acrylates etc. have been found to be necessary, which means significantly less danger for environment and human health (toxicity of adhesive composition); in combination with
(d) simple structure of the block copolymer which can be manufactured with a coupling efficiency of greater than 95% in usual relatively simple equipment giving rise to a rather cheap block copolymer of a well-regulated structure.

It will be appreciated that another aspect of the present invention will be formed by solution and hot melt adhesive compositions. A preferred aspect is formed by hot melt adhesive compositions, having an improved sensitivity to UV and/or EB radiation curing comprising as main ingredient the hereinbefore specified coupled block copolymers (AB)ₚ(B)_{q}X, together with the usual ingredients of pressure sensitive adhesive compositions, such as tackifying resin, extender oil and/or plasticizer, petroleum derived waxes, antioxidant, photosensitizer (only necessary in case of UV radiation curing) and optionally an A block modifying resin. It will be appreciated that another aspect of the present invention is formed by solution adhesive compositions, comprising the block copolymers as specified in pages 6 and 7.

The block copolymer by itself has appeared to be not sufficiently tacky or sticky. Therefore it is necessary to add a tackifying resin that is compatible with the elastomeric poly(butadiene) blocks.

In the adhesive compositions according to the present invention it has been found preferable that the tackifying resin should have a low level of unsaturation in order to achieve low radiation curing dosage of the adhesive composition; mixtures of resins having higher and lower unsaturations and softening points may also be used but are less preferred due to possible uncontrollable side reactions.

Examples of resins which are useful in the adhesive compositions of the present invention include saturated resins, esters of resins, polyterpenes, terpene phenol resins, and polymerized mixed olefins or mixtures thereof.

The amount of tackifying resin or resins in total varies from 0 to 500 parts per hundred parts of block copolymer (phr), preferably from 50 to 200 phr.

Optionally a modifying resin that is compatible with the poly(vinyl aromatic) blocks, may be added as long as it does not appreciably hinder the radiation curing process as a result of mixing on a molecular level with the poly(butadiene) blocks.

Compatibility is judged by the method disclosed in U.S. patent No. 3,917,607. Normally the resin should have a softening point above 100 °C as determined by ASTM method E28.

The tackifiers are selected for their ability to tackify the elastomeric block and their compatibility therewith.

However, in the present invention, it is preferable that the tackifying resin has a low level of unsaturation in order to achieve low dosage radiation curing of the composition. Mixtures of resins having higher and lower unsaturations and softening points may also be used. Examples of resins which are useful in the compositions of this invention include unsaturated and hydrogenated resins, esters of resins, polyterpenes, terpene phenol resins, and polymerised mixed olefins with hydrogenated resins preferred.

Examples of useful tackifying resins are ESCOREZ 5300 series (ESCOREZ is a trade mark); REGALITE R91, R101, S100, S260 (REGALITE is a trade mark); REGALREZ 1018, 3102, 6108, 5095 (REGALREZ is a trade mark) and ZONATAC Lite series like the ZONATAC 105 Lite (ZONATAC is a trade mark).

The adhesive compositions of the instant invention may also contain plasticisers such as rubber extending or compounding oils in order to provide wetting action and/or viscosity control. These plasticisers are well-known in the art and may include both high saturated content oils and high aromatic content oils. Said plasticizers include not only the usual plasticizers but also embrace the use of olefin oligomers and low molecular weight polymers as well as vegetable and animal oil and their derivatives. The petroleum derived oils which may be employed are relatively high boiling materials and preferably contain only a minor proportion of aromatic hydrocarbons (preferably less than 30 percent and, more preferably, less than 15 percent by weight of the oil).

Such oils are for example SHELLFLEX 451, 4510 (SHELLFLEX is a trade mark); ONDINA 68 (ONDINA is a trade mark); RISELLA 68 (RISELLA is a trade mark); PRIMOL 352 (PRIMOL is a trade mark) and WITCO 260 (WITCO is a trade mark).

Alternatively, the oil may be totally non-aromatic. The oligomers may be polypropylene, polybutene, hydrogenated polyisoprene or hydrogenated polybutadiene having average weights preferably between 200 and about 10,000.

Vegetable and animal oils include glyceryl esters of usual fatty acids and polymerisation products thereof.

The amount of plasticiser and oil employed varies from 0 to 500 phr (parts by weight per hundred parts by weight of rubber), preferably from 0 to 100 phr and more preferably from 5 to 60 phr.

Various petroleum derived waxes may also be present in the composition in order to impart fluidity in the molten condition of the adhesive and flexibility to the set adhesive, and to serve as a wetting agent for bonding cellulosic fibers. The term "petroleum derived wax" includes both paraffin and microcrystalline waxes having a melting point within the range of about 54 °C to about 107 °C as well as synthetic waxes such as low molecular weight polythylene or Fisher-Tropsch waxes.

The amount of petroleum derived waxes employed herein varies from 0 to about 100 phr, preferably from 0 to about 15 phr.

It will be appreciated that the best results (i.e. a satisfactory curve achieved with minimum irradiation dosage) are achieved when, like the tackifying resins, the plasticisers and oils contain low levels of unsaturation. Additionally, it is also preferable to minimize the aromatic content thereof.

The adhesive compositions may further contain conventional additives such as e.g. stabilisers, pigments, fillers and the like but the compositions should be free of other additives and impurities which adversely affect the adhesive properties of the composition, and particularly the high temperature properties thereof.

Stabilisers and oxidation inhibitors are typically added to the commercially available compounds in order to protect the ingredients against degradation during preparation and use of the adhesive compositions, however without interfering with the irradiation curing of the polymer.

Combinations of stabilisers are often more effective due to the different mechanisms of degradation to which various polymers are subject.

Certain hindered phenols, organo-metallic compounds, aromatic amines, aromatic phosphites and sulphur compounds are useful for this purpose.

Examples of effective types of these materials include phenolic antioxidants, thio compounds and tris-(nonylated phenyl) phosphites.

Examples of commercially available antioxidants are "IRGANOX 565" 2,4-bis-(n-octylthio)-6-(4-hydroxy-3,5-di-tertiary-butyl anilino)-1,3,5-triazine, "IONOL" 2,6-di-tertiary-butyl-4-methyl phenol, "IRGANOX 1010" tetrakis-ethylene-(3,5-di-tertiary-butyl-4-hydroxy-hydrocinnamate)methane, "IONOX 330" 3,4,6-tris (3,5-di-tertiary-butyl-p-hydroxybenzyl)-1,3 ,5-trimethylbenzene and "POLYGARD HR" tris-(2,4-di-tertiary-butyl-phenyl) phosphite.

In general from about 0.01 percent to about 5.0 percent by weight of one or more antioxidants is included in the adhesive composition.

The adhesive compositions of the present invention may be prepared by blending block copolymers, tackifying resins and other desired ingredients at an elevated temperature, e.g. at about 160 °C (hot-melt) using a Z blade mixer or extruder or any other usual type of mixer for that propose.

Adhesives of the present invention are especially suited for preparation as 100% solids hot-melt adhesives since they give relatively low processing viscosities, less than hundred thousand centipoise, and adequate pot life, up to several hours, at processing temperature of about 150 °C to 180 °C. A preferred method for processing is the use of an extruder to mix the adhesive and feed the coating die as is disclosed in US patent No. 3,984,509.

The compositions of the present invention are cured by exposure to high energy ionizing radiation such as electron beam radiation.

The electron beam radiation or high energy ionizing radiation which employed to effect the cross-linking reaction can be obtained from any suitable source such as an atomic pile, an electron gun, a resonant transformer accelerator, a Van de Graaf electron accelerator, a Lineac electron accelerator, a betatron, a synchrotron or a cyclotron. Radiation from these sources will produce ionizing radiation such as electrons, protons, neutrons, deuterons, gamma rays, X rays, alpha particles, and beta particles.

The cross-linking reaction is conveniently effected at room temperature, but it can be conducted at depressed or elevated temperatures if desired. It is also within the spirit and scope of the invention to effect the cross-linking reaction within the confines of an inert atmosphere to prevent interference in the block copolymer cross-linking, particularly at an exposed surface.

Additionally, cross-linking may be effected by irradiating the composition which is sandwiched between substrates such as when the composition is utilized as a tie-layer between these substrates. Similarly, when the cross-linking reaction is not conducted within the confines of an inert atmosphere, release paper may be placed over the exposed composition surface contacting and covering same. Thus, the composition may be cross-linked by irradiation through the release paper or to the substrate.

The amount of irradiation required to produce a satisfactory cure depends primarily upon the type and concentration of the block copolymer employed and the unsaturation level present in the composition. Suitable dosages of electron beam irradiation are in the range from 0.5 to 7 Mrad, preferably about 1 Mrad to about 6 Mrad and more preferably about 1 Mrad to about 3 Mrad.

The adhesive compositions may also be cured by exposure to ultraviolet radiation for a period of time sufficient to effect the desired amount of cross-linking. Ordinarily, when use of ultraviolet light is contemplated the adhesive composition will be formulated with from 0.2 to 5% of an ultraviolet sensitizing component (photo-initiator) based on the weight of the adhesive. Any of the known ultraviolet sensitizing compounds may be used.

Useful photo-initiators are 2,2-dimethoxy-2 phenyl acetophenone, benzophenone, propiophenone, cyclopropyl phenyl ketone, acetophenone, 1,3,5-triacetyl benzene, benzaldehyde, thioxanthane, anthraquinone, beta-naphtyl phenyl ketone, beta-naphthaldehyde, beta-acetonaphthone; 2,3-pentanedione, benzil, fluoronone, pyrene, benzanthrone, anthracene and the class arylketones substituted with morpholino and with hydrocarbyl thio groups such as disclosed in US patent No. 4,582,862.

A photo-initiator such as IRGACURE 651 or IRGACURE 907 (tradename of Ciba-Geigy) is preferred.

It will be appreciated that the length of exposure will be dependent on the intensity of the radiation, the amount and particular type of the ultraviolet sensitizing compound employed, thickness of the adhesive layer etc. The photo-initiators may preferably be included in an amount in the range of from 0.5 to 5 parts by weight per 100 parts by weight of block copolymer and preferably in an amount in the range of from 1 to 4 parts by weight.

A preferred use of the present formulation is in the preparation of pressure-sensitive adhesive (PSA) tapes or in the manufacture of labels. The pressure-sensitive adhesive tape comprises a flexible backing sheet and a layer of the adhesive composition of the instant invention coated on one major surface of the backing sheet. The backing sheet may be a plastic film, paper or any other suitable material and the tape may include various other layers or coatings, such as primers, release coatings and the like, which are used in the manufacture of pressure-sensitive adhesive tapes.

The invention is further illustrated by means of the following examples.

### Preparation of branched block copolymers (I-XII)

To a first 5 l reactor about 3 l of cyclohexane were added, which was stripped during about half an hour with nitrogen. After addition of 150 g of styrene, the reactor contents were titrated at room temperature with a 12 wt% solution of sec.butyllithium (BuLi) in cyclohexane, whereby any impurities present in the reactor mixture were scavenged. Hereafter 15.6 mmol BuLi were added and the temperature was raised to and maintained at 50 °C. After about 30 minutes the poly(styrene) Li block had been formed and the contents were transferred to a second 10 l reactor, which had previously been charged with about 3 l of cyclohexane being stripped with nitrogen during about half an hour and a varying amount of diethoxy ethane modifier and 350 g of butadiene which had previously been titrated with a butyllithium solution.

The temperature was raised to 50 °C. A predetermined additional amount of BuLi was added to the second reactor in varying amounts and an amount of 500 g of butadiene was gradually dosed over about 30 minutes.

Thereafter the second reactor was brought to and kept at 80 °C, 7.7 mmoles of SiCl₄ were added and the coupling reaction was performed in about 30 minutes.

After about 2 hours 10 g of 2,6-di-tert.-butyl-4-methylphenol were added. Hereafter the solvent was removed by steam stripping and the obtained polymer was dried in an oven at 60 °C during 5-6 hours.

The obtained branched block copolymers are listed in the following Table 1:

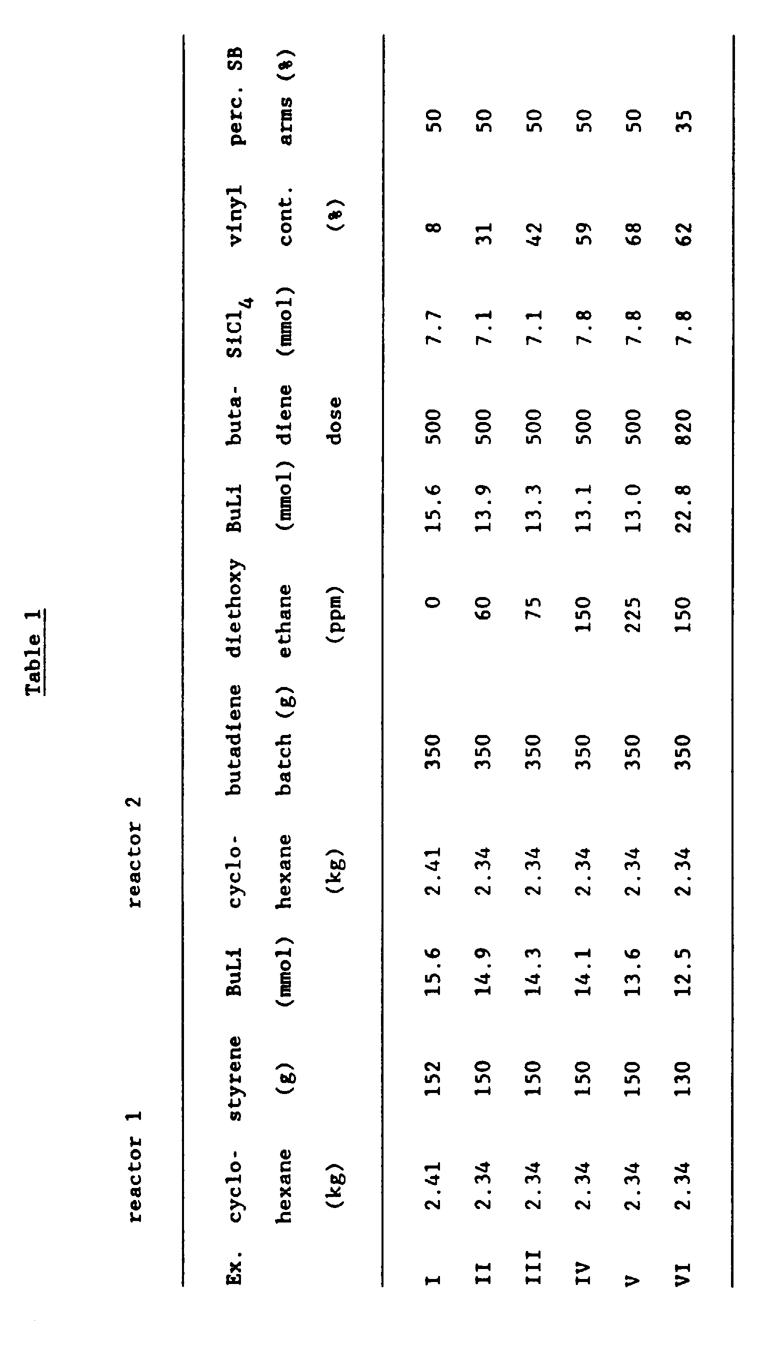

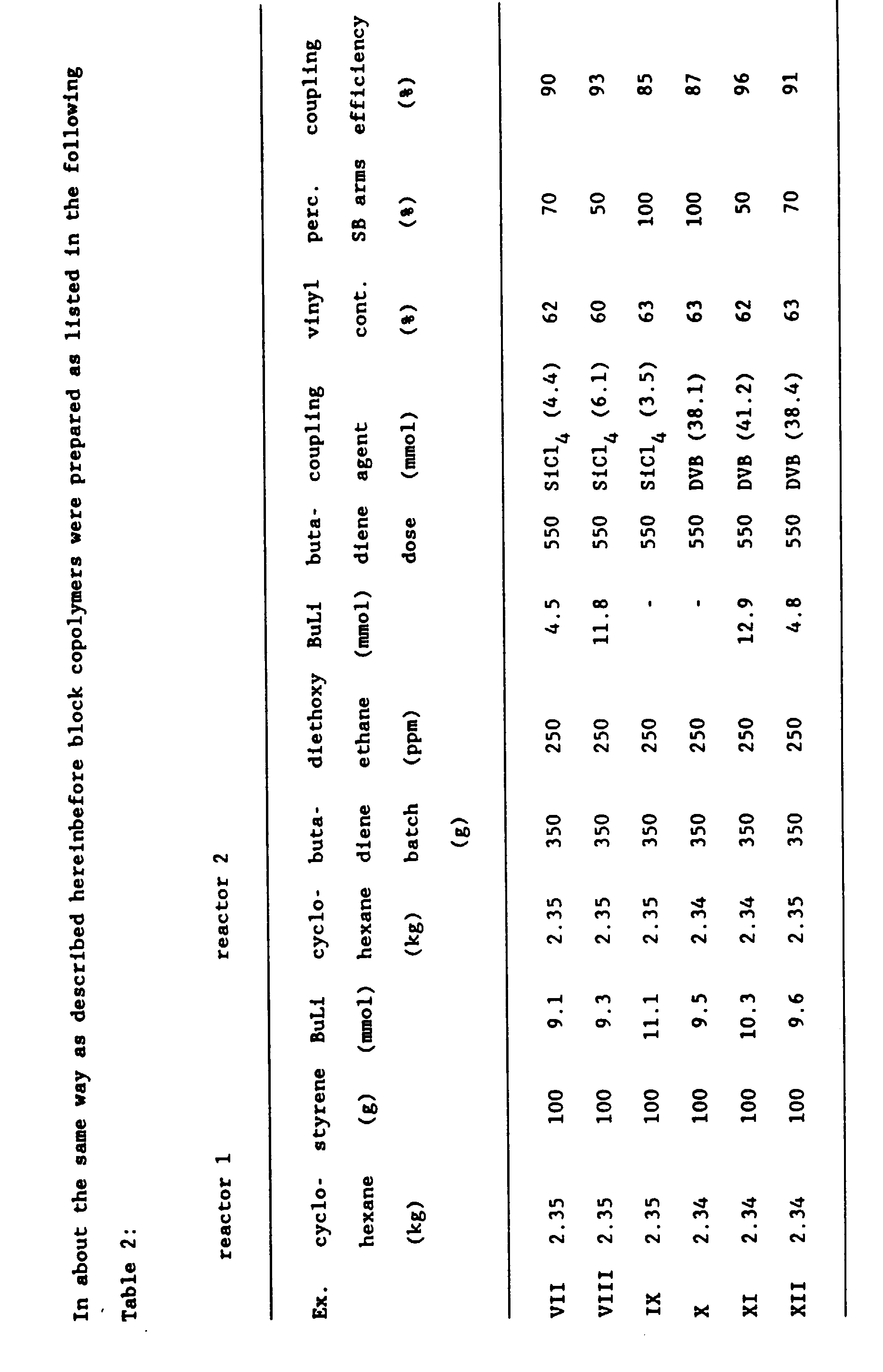

### Estimation of properties:

The hot-melt viscosity of an adhesive formulation containing the listed polymers was measured, as listed hereinafter in Tables 3 and 4 in comparison to that one of KRATON D-1320X block copolymer, which was up to now preferably used in similarly composed radiation curable adhesive compositions.

The adhesive composition used was composed as follows:

| | |
|---|---|
| Block copolymer | 100 pts |
| FORAL 85 | 90 phr |
| IRGANOX 1010 | 1 phr |

**Table 3**

| Polymer | Hot-melt viscosity at 180 °C (Pa.s) | Hot-melt viscosity after 3 hours at 180 °C (Pa.s) |
|---|---|---|
| I | 115 | 120 |
| II | 53 | 75 |
| III | 75 | 105 |
| IV | 52 | 70 |
| V | 40 | 40 |
| VI | 117 | 320 |
| KRATON D-1320X | 200 | 380 |

**Table 4**

| Melt viscosity * | Pa.s | |
|---|---|---|
| Polymer code | after 30 min. | after 180 min. |
| XI | 338 | > 2000 |
| XII | 1900 | > 2000 |
| X | > 2000 | > 2000 |
| VIII | 127 | 299 |
| VII | 828 | > 2000 |
| IX | 1690 | > 2000 |
| D1320X | 112 | 125 |

| | | |
|---|---|---|
| * The adhesive formulation used for melt viscosity measurement was composed 100 pts polymer 90 phr FORAL 85 (tradename) 15 phr SHELLFLEX 451 (tradename) 2 phr IRGANOX 1010 (tradename) and the viscosity was measured with BROOKFIELD THERMOSEL (tradename). | | |

Most of these polymers were found to be very stable under processing conditions, the stability improving with the increasing vinyl content (polymers IV and V were found to be most stable).

The polymers were compounded in adhesive formulations as follows:

A radiation sensitive adhesive formulation to provide radiation curing, based on KRATON D-1320X block copolymer, was prepared according to the following recipe:

| | |
|---|---|
| Block copolymer | 100 pts |
| REGALITE R91 | 150 phr |
| REGALREZ 1018 | 60 phr |
| IRGACURE 651 | 3 phr |
| IRGANOX 1010 | 1 phr |

This formulation was found to provide also very aggressive tack properties.

The polymers varying in vinyl content and having therefore different Tg, were not compounded into the same formulation. The amount of ingredients was adjusted to get the same mid-block Tg than that of the KRATON D-1320 based formulation. However, and because the curing is done in the butadiene mid-block, the butadiene mid-block fraction present in the adhesive was kept constant (otherwise, an adhesive having a higher proportion of butadiene mid-block might be more radiation sensitive than another one).

The Holding power at 95 °C are as follows: (this is a Holding power test carried out at a temperature very close to the polystyrene softening point; it is therefore a very reliable test and unirradiated polymers do not resist longer than few seconds).

The test was performed with 0.5 kg load on a 1 square inch surface after UV curing at 5 m/min under a Fusion D-Bulb. The samples were coated with 22 g/m². The results are given as function of the dosage (or the number of passes) in Table 5:

**Table 5**

| Holding power at 95 °C on 0.5 kg load on 1 square inch after UV curing | | |
|---|---|---|
| | 1 Pass (h) | 2 Passes (h) |
| I | 0 | 4.2 |
| II | 0.5 | 0.3 |
| III | 3.3 | > 280 |
| IV | > 116 | > 280 |
| V | > 116 | > 280 |
| VI | > 116 | > 280 |
| KRATON D-1320X | 60 | > 280 |

From previous test results it will be clear that polymers I and II are outside the present invention as claimed hereinafter.

The same test was performed on the samples IV, V and VI, but with a load of 1 kg per square inch. The results are as indicated in Table 6:

**Table 6**

| Holding power at 95 °C on 1 kg load on 1 square inch after UV curing | | |
|---|---|---|
| | 1 Pass (h) | 2 Passes (h) |
| IV | 0.3 | > 280 |
| V | 106 | > 280 |
| VI | > 280 | > 280 |
| KRATON D-1320X | 0.2 | 8.6 |

Polymers I to VI were also compared to KRATON D-1320X by Shear Adhesion Failure Temperature (SAFT) after UV curing. The results are given as function of the dosage in Table 7.

**Table 7**

| | 0 Pass (°C) | 1 Pass (°C) | 2 Passes (°C) |
|---|---|---|---|
| I | 80 | 103 | 165 |
| II | 79 | 112 | 180 |
| III | 77 | 128 | 115 |
| IV | 99 | > 188 | > 185 |
| V | 75 | > 179 | > 185 |
| VI | 78 | 154 | > 185 |
| KRATON D-1320 X | 77 | 148 | 157 |

Using the following adhesive composition for UV and EB radiation:

| | |
|---|---|
| Polymer | 100 pts |
| FORAL 85 | 90 phr |
| SHELLFLEX 451 | 15 phr |
| IRGACURE 651 | 3 phr |
| IRGANOX 1010 | 2 phr |

the polymers VII-XII were tested as to SAFT after curing, as listed in the tables 8 and 9.

**Table 8**

| SAFT (°C) after UV curing of adhesive compositions | | | | | | |
|---|---|---|---|---|---|---|
| SAFT, °C | | UV-dose, number of passes at 15 m/min | | | | |
| Polymer code | S-B content % | 0 | 1 | 2 | 4 | 6 |
| XI | 50 | 80 | > 200 | > 200 | > 200 | > 200 |
| XII | 70 | 101 | > 200 | > 200 | > 200 | > 200 |
| X | 100 | 115 | > 200 | > 200 | > 200 | > 200 |
| | | | | | | |
| VIII | 50 | 79 | 93 | > 200 | > 200 | > 200 |
| VII | 70 | 100 | 151 | > 200 | > 200 | > 200 |
| IX | 100 | 103 | 158 | > 200 | > 200 | > 200 |

**Table 9**

| SAFT (°C) after EB curing of adhesive compositions | | | | |
|---|---|---|---|---|
| | EB-dose, Megarads | | | |
| Polymer code | S-B content % | 0 | 1 | 2 |
| XI | 50 | 80 | 109 | > 200 |
| XII | 70 | 101 | > 200 | > 200 |
| X | 100 | 115 | 146 | > 200 |
| | | | | |
| VIII | 50 | 79 | 83 | 85 |
| VII | 70 | 100 | 113 | 126 |
| IX | 100 | 103 | 120 | 137 |

It will be appreciated from the previous examples that a significant improvement in radiation sensitivity could be obtained with the polymers of the present invention as compared to KRATON D-1320X.

Although some of these polymers e.g. VI, X, XI and XII appear to have high melt viscosities making them inappropriate for hot melt adhesive compositions, they can advantageously be used in solution pressure sensitive adhesive compositions due to their excellent radiation sensitivity.

The most preferred type of polymers, which can be used in hot melt adhesive compositions and which show a combination of low melt viscosity and attractive radiation sensitivity is represented by polymers IV and V.

## Claims

1. Radiation sensitive block copolymers (AB)ₚ(B)_{q}X wherein A is a poly(vinylaromatic) block and B is a poly(butadiene) block, wherein X is the residue of a polyvalent coupling agent, wherein p has a number average value of at least 1.5 and wherein q has a number average value of 0 or higher, the sum of p and q values being at least 4, the block copolymer having an average bound vinylaromatic content in the range of from 7 to 35 wt% and preferably in the range of from 10 to 20 wt%, and having a total apparent molecular weight in the range of from 50,000 to 1,500,000, and wherein the vinyl content in the poly(butadiene) blocks is in the range of from 35 to 70%.

2. Radiation sensitive block copolymers according to claim 1, characterized in that the blocks A are derived from styrene as main component.

3. Radiation sensitive block copolymers, according to claims 1 and 2, characterized in that the B blocks have an apparent molecular weight in the range of from 15,000 to 250,000 and preferably from 25,000 to 80,000 and the A blocks have an apparent molecular weight in the range of from 5,000 to 125,000 and preferably from 7,000 to 50,000 and more preferably from 9,000 to 12,000.

4. Radiation sensitive block copolymers according to claims 1-3, having the structure (AB)ₚ(B)_{q}X, wherein X is the residue of a tetravalent coupling agent, wherein p and q both have a number average value in the range from 2.5 to 1.5, whereas the sum of p and q values being 4.

5. Radiation sensitive block copolymers according to claim 4, wherein p and q both have a number average value of from 2.1 to 1.9.

6. Radiation sensitive block copolymers according to claims 4 and 5, characterized in that they have a total apparent molecular weight in the range of from 200,000 to 300,000.

7. Radiation sensitive block copolymers according to claims 4-6, characterized in that the vinyl content in the poly(butadiene) blocks is in the range of from 45 to 70%.

8. Radiation sensitive block copolymers according to claims 1-3, characterized in that p has a number average value of at least 1.5 and preferably in the range of from 3 to 20 and more preferably in the range from 3 to 10, wherein q has a number average value of 0 or higher, and preferably in the range from 0 to 10, the sum of p and q values being at least 4 and wherein the ratio of p/(p+q) is 0.375 or more.

9. Radiation sensitive block copolymers according to claim 8, wherein the sum of p and q values is more than 6, and preferably in the range from 6 to 20.

10. Process for the preparation of radiation sensitive block copolymers according to claims 4-7, comprising:
(a) polymerizing predominantly butadiene in the presence of a living poly(monovinylaromatic)lithium compound A-Li, in which A represents a polymerized monovinylaromatic block, in the presence of a modifier, so as to form a block copolymer AB-Li, in which block B substantially comprises 1,2-polymerized butadiene;
(b) polymerizing predominantly butadiene in the presence of an organolithium initiator, RLi, wherein R being an alkyl group and in the presence of a modifier, so as to form a polymer block B-Li, substantially comprising 1,2-polymerized butadiene molecules, and the molar ratio U between the initiator R-Li and the compound A-Li being in the range of from 0.875 to 1.125 and preferably from 0.95 to 1.05, most preferably the ratio aimed at will be as near as possible to 1.0;
(c) coupling the mixture of living polymer blocks A-B-Li and B-Li obtained by the polymerizations mentioned under sub (a) and (b) with a coupling agent X which is tetrafunctional.

11. Process according to claim 10, characterized in that exactly the same amount of the organolithium compound for the initiation of the polymerization of styrene and of butadiene is added.

12. Process according to claims 10 and 11, characterized in that as coupling agent SiCl₄, SnCl₄ or DEAP or mixtures thereof are used.

13. Radiation curable sealant, coating or adhesive compositions, comprising as main ingredient one or more block copolymers according to claims 1-9.

14. Radiation curable adhesive compositions, comprising one or more block copolymers according to claims 1-9 in addition to one or more usual ingredients such as tackifying resin, extender oil, plasticizer, petroleum derived waxes, antioxidant, photosensitizer and a poly(vinylaromatic) block modifying resin.

15. Radiation curable hot melt adhesive compositions characterized in that they comprise one or more of the block copolymers according to claims 4-7.

16. Radiation curable solution adhesive compositions characterized in that they comprise one or more of the block copolymers according to claims 8 and 9.

17. UV radiation curable adhesive compositions, comprising in addition to one or more block copolymers according to claims 1-9, at least one photo-initiator selected from 2,2 dimethoxy-2-phenyl acetophenone, benzophenone, propiophenone, cyclopropyl phenyl ketone, acetophenone; 1,3,5-triacetyl benzene, benzaldehyde, thioxanthane, anthraquinone, beta naphtyl phenyl ketone, beta naphtaldehyde, beta-acetonaphtone, 2,3-pentanedione, benzil, fluoronone, pyrene, benzanthrone, anthracene and the class arylketones substituted with morpholino and with hydrocarbyl thio groups.

18. UV radiation curable adhesive compositions according to claim 17, comprising IRGACURE 651 or IRGACURE 907 as photo-initiator.

19. UV radiation curable adhesive compositions according to claims 17 and 18, characterized in that the photo-initiator has been included in an amount in the range of from 0.5 to 5 parts by weight per 100 parts by weight of block copolymer and preferably in the range of from 1 to 4 parts by weight.

20. Pressure sensitive curable tapes or labels, comprising a flexible backing sheet and a layer of the adhesive composition according to claims 13-19, coated on one major surface of the backing sheet.

## Patentansprüche

1. Strahlungsempfindliche Blockcopolymere (AB)ₚ(B)_{q}X, worin A einen polyvinylaromatischen Block und B einen Polybutadienblock bedeutet, X für den Rest eines mehrwertigen Kupplungsmittels steht, p einen zahlenmittleren Wert von mindestens 1,5 und q einen zahlenmittleren Wert von 0 oder mehr aufweist, wobei die Summe der Werte von p und q mindestens 4 beträgt, mit einem mittleren Gehalt an eingebundenem Vinylaromaten im Bereich von 7 bis 35 Gew.-% und bevorzugt im Bereich von 10 bis 20 Gew.-%, einem gesamten scheinbaren Molekulargewicht im Bereich von 50.000 bis 1.500.000 und einem Vinylgehalt der Polybutadienblöcke im Bereich von 35 bis 70%.

2. Strahlungsempfindliche Blockcopolymere nach Anspruch 1, dadurch gekennzeichnet, daß sich die Blöcke A von Styrol als Hauptkomponente ableiten.

3. Strahlungsempfindliche Blockcopolymere nach den Ansprüchen 1 und 2, dadurch gekennzeichnet, daß die Blöcke B ein scheinbares Molekulargewicht im Bereich von 15.000 bis 250.000 und bevorzugt von 25.000 bis 80.000 und die Blöcke A ein scheinbares Molekulargewicht im Bereich von 5.000 bis 125.000 und bevorzugt von 7.000 bis 50.000 und besonders bevorzugt von 9.000 bis 12.000 aufweisen.

4. Strahlungsempfindliche Blockcopolymere nach den Ansprüchen 1-3 mit der Struktur (AB)ₚ(B)_{q}X, worin X für den Rest eines vierwertigen Kupplungsmittels steht und sowohl p als auch q einen zahlenmittleren Wert im Bereich von 2,5 bis 1,5 aufweisen, während die Summe der Werte von p und q 4 beträgt.

5. Strahlungsempfindliche Blockcopolymere nach Anspruch 4, wobei sowohl p als auch q einen zahlenmittleren Wert von 2,1 bis 1,9 aufweisen.

6. Strahlungsempfindliche Blockcopolymere nach den Ansprüchen 4 und 5, dadurch gekennzeichnet, daß sie ein gesamtes scheinbares Molekulargewicht im Bereich von 200.000 bis 300.000 aufweisen.

7. Strahlungsempfindliche Blockcopolymere nach den Ansprüchen 4-6, dadurch gekennzeichnet, daß der Vinylgehalt der Polybutadienblöcke im Bereich von 45 bis 70% liegt.

8. Strahlungsempfindliche Blockcopolymere nach den Ansprüchen 1-3, dadurch gekennzeichnet, daß p einen zahlenmittleren Wert von mindestens 1,5 und bevorzugt im Bereich von 3 bis 20 und besonders bevorzugt im Bereich von 3 bis 10 und q einen zahlenmittleren Wert von 0 oder mehr und bevorzugt im Bereich von 0 bis 10 aufweist, die Summe der Werk von p und q mindestens 4 und das Verhältnis p/(p+q) mindestens 0,375 beträgt.

9. Strahlungsempfindliche Blockcopolymere nach Anspruch 8, wobei die Summe der Werte von p und q über 6 und bevorzugt im Bereich von 6 bis 20 liegt.

10. Verfahren zur Herstellung von strahlungsempfindlichen Blockcopolymeren gemäß den Ansprüchen 4-7, bei dem man:
(a) überwiegend Butadien in Gegenwart einer lebenden polymonovinylaromatischen Lithiumverbindung A-Li, worin A einen polymonovinylaromatischen Block bedeutet, und eines Modifikators zu einem Blockcopolymer AB-Li, bei dem der Block B im wesentlichen 1,2-polymerisiertes Butadien enthält, polymerisiert;
(b) überwiegend Butadien in Gegenwart eines Organolithium-Initiators RLi, worin R eine Alkylgruppe darstellt, und eines Modifikators zu einem Polymerblock B-Li, der im wesentlichen 1,2-polymerisierte Butadien-Moleküle enthält, wobei das molare Verhältnis U von Initiator R-Li zur Verbindung A-Li im Bereich von 0,875 und 1,125 und bevorzugt von 0,95 bis 1,05 liegt und man ganz besonders bevorzugt so genau wie möglich ein Verhältnis von 1,0 anstrebt, polymerisiert;
(c) die Mischung der durch die unter den Unterpunkten (a) und (b) erwähnten Polymerisationen erhaltenen lebenden Polymerblöcke A-B-Li und B-Li mit einem tetrafunktionellen Kupplungsmittel X kuppelt.

11. Verfahren nach Anspruch 10, dadurch gekennzeichnet, daß man der Polymerisation von Styrol und von Butadien zur Initiierung genau gleiche Mengen an Organolithiumverbindung zusetzt.

12. Verfahren nach den Ansprüchen 10 und 11, dadurch gekennzeichnet, daß man als Kupplungsmittel SiCl₄, SnCl₄ oder DEAP oder deren Gemische verwendet.

13. Strahlungshärtbare Dichtungs-, Beschichtungs- oder Klebstoffzusanmensetzungen, enthaltend als Hauptbestandteil ein oder mehrere Blockcopolymere gemäß den Ansprüchen 1-9.

14. Strahlungshärtbare Klebstoffzusanmensetzungen, enthaltend neben einem oder mehreren Blockcopolymeren gemäß den Ansprüchen 1-9 zusätzlich noch einen oder mehrere übliche Bestandteile, wie Klebharz, Strecköl, Weichmacher, Petroleumwachs, Antioxidationsmittel, Photosensibilisator und ein Polyvinylaromatenblock-Modifizierharz.

15. Strahlungshärtbare Schmelzklebstoffzusammensetzungen, dadurch gekennzeichnet, daß sie ein oder mehrere der Blockcopolymere gemäß den Ansprüchen 4-7 enthalten.

16. Strahlungshärtbare Lösungsklebstoffzusammensetzungen, dadurch gekennzeichnet, daß sie ein oder mehrere der Blockcopolymere gemäß den Ansprüchen 8 und 9 enthalten.

17. UV-härtbare Klebstoffzusanmensetzungen, enthaltend neben einem oder mehreren Blockcopolymeren gemäß den Ansprüchen 1-9 mindestens einen aus 2,2-Dimethoxy-2-phenylacetophenon, Benzophenon, Propiophenon, Cyclopropylphenylketon, Acetophenon, 1,3,5-Triacetylbenzol, Benzaldehyd, Thioxanthan, Anthrachinon, beta-Naphthylphenylketon, beta-Naphthaldehyd, beta-Acetonaphthon, 2,3-Pentandion, Benzil, Fluoronon, Pyren, Benzanthron, Anthracen und der Gruppe der durch Morpholino- und durch Thiokohlenwasserstoffgruppen substituierten Arylketone ausgewählten Photoinitiator.

18. UV-härtbare Klebstoffzusammensetzungen gemäß Anspruch 17, enthaltend als Photoinitiator IRGACURE 651 oder IRGACURE 907.

19. UV-härtbare Klebstoffzusammensetzungen gemäß den Ansprüchen 17 und 18, dadurch gekennzeichnet, daß der Photoinitiator in einer Menge im Bereich von 0,5 bis 5 Teilen pro 100 Gewichtsteile des Blockcopolymers und bevorzugt in einem Bereich von 1 bis 4 Gewichtsteilen enthalten ist.

20. Haftklebrig-härtbare Klebebänder oder Aufkleber aus einem flexiblen Trägerblatt und einer auf eine Hauptfläche des Trägerblatts aufgetragenen Schicht der Klebstoffzusammensetzung gemäß den Ansprüchen 13-19.

## Revendications

1. Copolymères séquencés sensibles aux rayonnements de la formule (AB)ₚ(B)_{q}X, dans laquelle A représente une séquence poly(vinylaromatique) et B représente une séquence poly(butadiénique), dans laquelle X représente le reste d'un agent de couplage polyvalent, dans laquelle B possède une valeur numérique moyenne d'au moins 1,5 et dans laquelle q possède une valeur numérique moyenne égale à 0 ou supérieure à 0, la somme des valeurs de p et de q étant égale à au moins 4, le copolymère séquencé possédant une teneur en substance vinylaromatique liée moyenne qui varie de 7 à 35% en poids et, de préférence, dans la plage de 10 à 20% en poids et possédant un poids moléculaire apparent total qui se situe dans la plage de 50.000 à 1.500.000 et où la teneur en substance vinylique dans les séquences poly(butadiéniques) varie de 35 à 70%.

2. Copolymères séquencés sensibles aux rayonnements suivant la revendication 1, caractérisés en ce que les séquences A dérivent du styrène comme composant principal.

3. Copolymères séquencés sensibles aux rayonnements suivant la revendication 1, caractérisés en ce que les séquences B possèdent un poids moléculaire apparent qui varie de 15.000 à 250.000 et, de préférence, de 25.000 à 80.000 et les séquences A possèdent un poids moléculaire apparent qui varie de 5.000 à 125.000 et, de préférence, de 7.000 à 50.000 et, plus avantageusement encore, de 9.000 à 12.000.

4. Copolymères séquencés sensibles aux rayonnements suivant l'une quelconque des revendications 1 à 3, caractérisés en ce qu'ils possèdent la structure (AB)ₚ(B)_{q}X, dans laquelle X représente le reste d'un agent de couplage tétravalent, dans laquelle p et q possèdent tous deux une valeur numérique moyenne qui fluctue de 2,5 à 1,5, tandis que la somme des valeurs de p et de q est égale à 4.

5. Copolymères séquencés sensibles aux rayonnements suivant la revendication 4, caractérisés en ce que p et q possèdent tous deux une valeur numérique moyenne de 2,1 à 1,9.

6. Copolymères séquencés sensibles aux rayonnements suivant l'une quelconque des revendications 4 et 5, caractérisés en ce qu'ils possèdent un poids moléculaire apparent total qui varie de 200.000 à 300.000.

7. Copolymères séquencés sensibles aux rayonnements suivant l'une quelconque des revendications 4 à 6, caractérisés en ce que la teneur en substance vinylique dans les séquences poly(butadiéniques) varie de 45 à 70%.

8. Copolymères séquencés sensibles aux rayonnements suivant l'une quelconque des revendications 1 à 3, caractérisés en ce que p possède une valeur numérique moyenne d'au moins 1,5 et, de préférence, dans la plage de 3 à 20 et, plus avantageusement encore, dans la plage de 3 à 10, q possède une valeur numérique moyenne de 0 ou supérieure à 0 et située, de préférence, dans la plage de 0 à 10, la somme des valeurs de p et de q étant au moins égale à 4 et le rapport de p/(p+q) est égal à 0,375 ou plus.

9. Copolymères séquencés sensibles aux rayonnements suivant la revendication 8, caractérisés en ce que la somme des valeurs de p et de q est supérieure à 6 et se situe, de préférence, dans la plage de 6 à 20.

10. Procédé de préparation de copolymères séquences sensibles aux rayonnements suivant l'une quelconque des revendications 4 à 7, caractérisé en ce que :
(a) on polymérise de manière prédominante le butadiène en présence d'un composé de poly(monovinylaromatique)lithium A-Li vivant, où A représente une séquence monovinylaromatique polymérisée, en présence d'un modificateur, de manière à former un copolymère séquencé A-B-Li dans lequel le bloc B est essentiellement constitué de butadiène polymérisé en 1,2,
(b) on polymérise de manière prédominante le butadiène en présence d'un amorceur du type organolithium, RLi, où R représente un radical alkyle et en présence d'un modificateur, de manière à former une séquence polymérique B-Li essentiellement constituée de molécules de butadiène 1,2-polymérisées et le rapport molaire U entre l'amorceur R-Li et le composé A-Li varie dans la plage de 0,875 à 1,125 et, plus avantageusement, de 0,95 à 1,05, plus avantageusement, le rapport visé se rapprochera le plus possible de 1,0,
(c) on couple le mélange des séquences polymériques vivantes A-B-Li et B-Li obtenues par les polymérisations susmentionnées sous (a) et sous (b) avec un agent de couplage X qui est tétrafonctionnel.

11. Procédé suivant la revendication 10, caractérisé en ce que l'on ajoute exactement la même quantité du composé d'organolithium pour l'amorce de la polymérisation du styrène que celle que l'on ajoute pour l'amorce de la polymérisation du butadiène.

12. Procédé suivant l'une quelconque des revendications 10 et 11, caractérisé en ce que l'on utilise SiCl₄, SnCl₄ ou TEAP, ou leurs mélanges, à titre d'agent de couplage.

13. Compositions adhésives, de revêtement ou d'étanchéité, durcissables par des rayonnements, caractérisées en ce qu'elles comprennent, à titre d'ingrédient principal, un ou plusieurs copolymères séquencés suivant l'une quelconque des revendications 1 à 9.

14. Compositions adhésives durcissables par des rayonnements, caractérisées en ce qu'elles comprennent un ou plusieurs copolymères séquencés suivant l'une quelconque des revendications 1 à 9, en plus d'un ou plusieurs ingrédients habituels, comme une résine conférant de l'adhésivité, une huile servant d'extendeur, un plastifiant, des cires dérivées du pétrole, un antioxydant, un photosensibilisateur et une résine modificatrice de la séquence poly(vinylaromatique).

15. Compositions adhésives thermofusibles, durcissables par des rayonnements, caractérisées en ce qu'elles comprennent un ou plusieurs des copolymères séquencés suivant l'une quelconque des revendications 4 à 7.

16. Compositions adhésives en solution, durcissables par des rayonnements, caractérisées en ce qu'elles comprennent un ou plusieurs des copolymères séquencés suivant l'une quelconque des revendications 8 et 9.

17. Compositions adhésives, durcissables par des rayonnements UV, caractérisées en ce qu'elles comprennent en plus d'un ou plusieurs copolymères séquencés suivant l'une quelconque des revendications 1 à 9, au moins un photoamorceur choisi parmi les substances suivantes : 2,2-diméthoxy-2-phénylacétophénone, benzophénone, propiophénone, cyclopropylphénylcétone, acétophénone, 1,3,5-triacétylbenzène, benzaldéhyde, thioxanthane, anthraquinone, bêta-naphtylphénylcétone, bêta-naphtaldéhyde, bêta-acétonaphtone, 2,3-petanedione, benzile, fluoronone, pyrène, benzanthrone, anthracène et les substances appartenant à la classe des arylcétones substituées par des radicaux morpholino et hydrocarbylthio.

18. Compositions adhésives durcissables par des rayonnements UV suivant la revendication 17, comprenant de l'IRGACURE 651 ou de l'IRGACURE 907 à titre de photoamorceur.

19. Compositions adhésives, durcissables par des rayonnements UV, suivant l'une quelconque des revendications 17 et 18, caractérisées en ce que le photoamorceur a été incorporé en une proportion qui varie de 0,5 à 5 parties en poids par 100 parties en poids du copolymère séquencé et, de préférence, dans la proportion de 1 à 4 parties en poids.

20. Etiquettes ou rubans sensibles à la pression et durcissables, comprenant une feuille dorsale souple et une couche de la composition adhésive suivant l'une quelconque des revendications 13 à 19, appliquée sur une surface majeure de la feuille dorsale.
